# EUROPEAN PATENT APPLICATION

(11) **EP 4 645 803 A1**
(43) Date of publication of application: **05.11.2025**
(21) Application number: 22969565.5
(22) Date of filing: 28.12.2022
(51) Int. Cl.: H04L 41/16

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: RGTH
(86) International application number: PCT/CN2022/142692
(87) International publication number: WO 2024/138411

(57) **Abstract**

Provided are a communication method and device. The method comprises: a first device sending first information to a second device, wherein the first information is used for indicating the type of a first data set. A first device sends to a second device information about the type of a data set, which helps the second device to understand the requirement of the first device for the data set, thereby potentially providing a more suitable data set for the first device, so as to improve performance of a model trained by the first device.

## Description

### TECHNICAL FIELD

This application relates to the field of communications technologies, and more specifically, to a communication method and a communications device.

### BACKGROUND

With development of communications technologies, wireless communication solutions based on machine learning (machine learning, ML)/artificial intelligence (Artificial Intelligence, AI) are increasingly used. In these wireless communication solutions, how to effectively train a model for a communications device is a key concern in the industry.

### SUMMARY

This application provides a communication method and a communications device. The following describes the aspects related to this application.

According to a first aspect, a communication method is provided, and the method includes: transmitting, by a first device, first information to a second device, where the first information is used for indicating a type of a first data set.

According to a second aspect, a communication method is provided, and the method includes: receiving, by a second device, first information transmitted by a first device, where the first information is used for indicating a type of a first data set.

According to a third aspect, a communications device is provided, and the communications device is a first device. The first device includes a communications module, configured to transmit first information to a second device, where the first information is used for indicating a type of a first data set.

According to a fourth aspect, a communications device is provided, and the communications device is a second device. The second device includes a communications module, configured to receive first information transmitted by a first device, where the first information is used to indicate a type of a first data set.

According to a fifth aspect, a communications device is provided, and the communications device includes a transceiver, a memory, and a processor. The memory is configured to store a program, and the processor is configured to: invoke a program in the memory, and control the transceiver to receive or transmit a signal, to cause a terminal to execute the method according to the first aspect or the second aspect.

According to a sixth aspect, an apparatus is provided, and the apparatus includes a processor, configured to invoke a program from a memory, to cause the apparatus to execute the method according to any one of the first aspect or the second aspect.

According to a seventh aspect, a chip is provided, and the chip includes a processor, configured to invoke a program from a memory, to cause a device on which the chip is installed to execute the method according to the first aspect or the second aspect.

According to an eighth aspect, a computer-readable storage medium is provided, where the computer-readable storage medium stores a program, and the program causes a computer to execute the method according to the first aspect or the second aspect.

According to a ninth aspect, a computer program product is provided. The computer program product includes a program, where the program causes a computer to execute a method according to the first aspect or the second aspect.

According to a tenth aspect, a computer program is provided. The computer program causes a computer to execute the method according to the first aspect or the second aspect.

The first device transmits to the second device information indicating a type of a data set, which facilitates the second device to understand a requirement of the first device for the data set, so as to provide a more suitable data set for the first device, thereby improving performance of a model trained by the first device.

### BRIEF DESCRIPTION OF DRAWINGS

FIG. 1 is an example diagram of a system architecture of a wireless communications system to which embodiments of this application are applicable.
FIG. 2 is a schematic diagram of an AI-based CSI coding solution.
FIG. 3 is a schematic flowchart of a communication method according to an embodiment of this application.
FIG. 4 is a schematic flowchart of a communication method according to another embodiment of this application.
FIG. 5 is a schematic flowchart of a communication method according to still another embodiment of this application.
FIG. 6 is a schematic flowchart of a communication method according to still another embodiment of this application.
FIG. 7 is a schematic flowchart of a communication method according to still another embodiment of this application.
FIG. 8 is a schematic flowchart of a communication method according to still another embodiment of this application.
FIG. 9 is a schematic flowchart of a communication method according to still another embodiment of this application.
FIG. 10 is a schematic flowchart of a communication method according to still another embodiment of this application.
FIG. 11 is a schematic flowchart of a communication method according to still another embodiment of this application.
FIG. 12 is a schematic flowchart of a communication method according to still another embodiment of this application.
FIG. 13 is a schematic diagram of a structure of a communications device according to an embodiment of this application.
FIG. 14 is a schematic diagram of a structure of a communications device according to another embodiment of this application.
FIG. 15 is a schematic structural diagram of an apparatus according to an embodiment of this application.

### DESCRIPTION OF EMBODIMENTS

### Communications system architecture

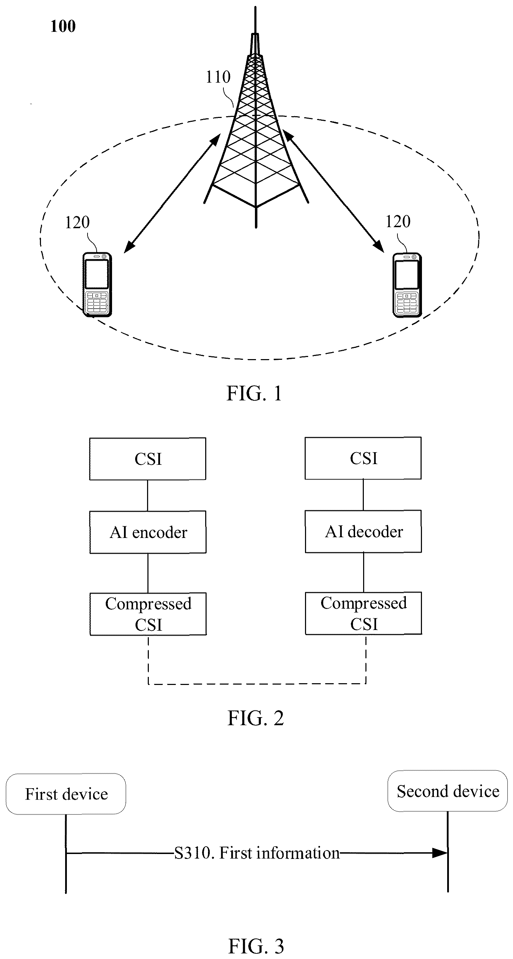

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographical area, and may communicate with the terminal device 120 located in the coverage area.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may serve as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to serve as a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario where the network device and the terminal device are located is not limited.

### ML/AI-based wireless communication scheme

Currently, ML/AI-based wireless communication schemes are increasingly applied in communications systems. For example, a wireless communications system may solve a problem of channel state information (channel state information, CSI) feedback by relying on AI. Referring to FIG. 2, an AI encoder (or CSI compression model) and an AI decoder (or CSI recovery model) may be introduced in a wireless communications system, so as to implement AI-based CSI information compression and feedback. In such scheme, an AI encoder is required to be deployed for a terminal device and an AI decoder is required to be deployed for a network device. An encoder and a decoder on the terminal device side and the network device side are required to be cooperatively used; otherwise, performance loss may be caused due to mismatch between the encoder and the decoder.

### Training mode of a model

For an ML/AI-based scheme, one important step is model training. In a communication scenario such as CSI feedback, to implement ML/AI-based CSI feedback, an encoder and a decoder are required to be respectively deployed in a terminal device and a network device, and the encoder and the decoder need to be cooperatively used, so as to complete a wireless communication task. Therefore, how to train the encoder and decoder is a key concern in the industry.

For the foregoing problem, a possible training mode is to complete training of the encoder and decoder at the terminal device or the network device, and then transmit a model required by a peer end to the peer end for use. For example, a terminal device trains a CSI compression model and a corresponding CSI recovery model; and the terminal device may then transmit the trained CSI recovery model to a network device, so that the network device implements a CSI decompression function by using the trained CSI recovery model. For another example, a network device trains a CSI compression model and a corresponding CSI recovery model; and the network device then transmits the trained CSI compression model to a terminal device, so that the terminal device implements a CSI compression function by using the trained CSI compression model.

The method of single-end training and model transmission mentioned above may affect model privatization protection. For example, when the terminal device transmits a network device-side model trained by the terminal device to the network device for use, the terminal device actually discloses a model design scheme of the terminal device to the network device. However, the terminal device may not expect the disclosure of such information and scheme, but only expect that a scheme on the network device side (for example, a CSI decoding scheme) can be cooperatively used with a scheme on the terminal device side (for example, a CSI compression scheme). Otherwise, when the network device transmits a terminal device-side model trained by the network device to the terminal device for use, the network device actually discloses a model design scheme of the network device to the terminal device. However, the network device may not expect the disclosure of such information and scheme, but only expect that the scheme on the terminal device side (for example, the CSI compression scheme) can be cooperatively used with the scheme on the network device side (for example, the CSI decoding scheme).

For the foregoing problems, a possible solution is that the terminal device does not directly provide a trained model to the network device, but provides a data set to the network device. The data set may help the network device complete training of a model for the network device. Similarly, the network device may not directly provide a trained model to the terminal device, but provide a data set to the terminal device. The data set may help the terminal device complete training of a model for the terminal device.

Although the foregoing solution solves the problem of model privatization protection, the solution causes problems of limiting model selection diversity and model performance.

For example, the network device trains a set of CSI compression model and CSI recovery model by using local data. Then, the network device locally uses the CSI recovery model, and transmits a data set corresponding to the obtained CSI compression model to the terminal device for use by the terminal device. In this case, the terminal device is only allowed to use this data set to train a local model for the terminal device. Therefore, an input interface, an output interface, and model performance of the local model for the terminal device are affected and limited by this set of data set. For example, the network device transmits, to the terminal device, a data set with a feature vector W as a CSI input interface. In this case, when the terminal device trains a model, the input interface of the CSI model cannot be constructed by using complete channel information H. For another example, if the feature vector W transmitted by the network device to the terminal device uses an interface format with sub-band granularity of 4RB and a size of 13 sub-bands, when the terminal device trains a model, an interface format with another sub-band granularity and another sub-band size cannot be used.

For another example, the terminal device trains a set of CSI compression model and CSI recovery model by using local data. Then, the terminal device locally uses the CSI compression model, and transmits a data set corresponding to the trained CSI recovery model to the network device for use by the network device. In this case, the network device is only allowed to use this data set to train a local model for the network device. Therefore, an input interface, an output interface, and model performance of the local model for the network device are affected and limited by this set of data set.

The following describes embodiments of this application in detail with reference to FIG. 3.

FIG. 3 is a schematic flowchart of a communication method according to an embodiment of this application. FIG. 3 is a description from a perspective of interaction between a first device and a second device. The first device and the second device may be two communications devices in a wireless communications system. The first device may include or be deployed with a coding model (or encoder); and correspondingly, the second device may include or be deployed with a decoding model (or decoder) corresponding to the coding model. Alternatively, the first device may include or be deployed with a decoding model; and correspondingly, the second device may include or be deployed with a coding model corresponding to the decoding model.

In some implementations, the first device may be a terminal device (for example, the terminal device 120 in FIG. 1), and the second device may be a network device (for example, the network device 110 in FIG. 1). Accordingly, information (such as the first information mentioned later) transmitted by the first device to the second device may be carried in one or more of uplink control information (uplink control information, UCI) or radio resource control (radio resource control, RRC) signaling. Information (such as one or more of the second information, the third information, the fourth information, or the fifth information mentioned later) transmitted by the second device to the first device may be carried in one or more of a downlink control information (downlink control information, DCI), a medium access control control element (medium access control control element, MAC CE), RRC signaling, an RRC reconfiguration message, a system broadcast, a master information block (master information block, MIB), or a system information block (system information block, SIB). The SIB is used as an example. The SIB may be a SIB1, or may be another type of a SIB.

In some implementations, the first device may be a network device (for example, the network device 110 in FIG. 1), and the second device may be a terminal device (for example, the terminal device 120 in FIG. 1). Accordingly, the information (such as the first information mentioned later) transmitted by the first device to the second device may be carried in one or more of DCI, a MAC CE, RRC signaling, an RRC reconfiguration message, a system broadcast, a MIB, or a SIB (for example, a SIB1 or another type of a SIB). The information (such as one or more of the second information, the third information, the fourth information, or the fifth information mentioned later) transmitted by the second device to the first device may be carried in one or more of UCI and RRC signaling.

Referring to FIG. 3, in step S310, the first device transmits first information to the second device. The first information may be used to indicate (or be used to determine, or be used to request) a type of a first data set. The type of the first data set may be one of a plurality of preset data set types.

In some implementations, the first data set may be configured to train a model for the first device. The model for the first device may be referred to as a local model for the first device. The model may be a model deployed on the first device, or may be a model to be deployed on the first device. The model may be a coding model, or may be a decoding model. For example, the model may be a CSI compression model or a CSI decompression model. In an example in which the first device is a terminal device and the second device is a network device, the model for the first device may be a CSI compression model, and the first data set may be used to train the CSI compression model for the first device. In an example in which the first device is a network device and the second device is a terminal device, the model for the first device may be a CSI decompression model, and the first data set may be used to train the CSI decompression model.

In some implementations, the first data set may be a data set expected to be used by the first device. In other words, the first device expects to train the model for the first device by using the first data set. For example, the first device may determine that a data set matching a type of input data/output data of the model for the first device is the first data set. Alternatively, the first data set may be a best training data set of the terminal device.

In some implementations, the type of the first data set may include one or more of the following: a type of input data; or a type of output data. In other words, the first information may indicate a type of input data and/or a type of output data. The type of input data may be a type of input data of a model, namely, a type of input data required by an input interface of the model. The type of output data may be a type of output data of a model, namely, a type of output data required by an output interface of the model. In some implementations, the first information may also be referred to as interface information or interface structure information.

In some implementations, the first information may indicate or include one or more of the following information: CSI input data (or referred to as CSI input information) and/or CSI reporting data (or referred to as CSI reporting information). The so-called CSI input data does not indicate content of the CSI input data, but indicates a type or a format of the CSI input data or information for determining a type or a format of the CSI input data. For example, the first information indicates a type of input data of the CSI compression model. The so-called CSI reporting data does not indicate content of the CSI reporting data, but indicates a type or a format of the CSI reporting data, or information for determining a type or a format of the CSI reporting data. For example, the first information indicates a type of CSI reporting data output by the CSI compression model.

A CSI feedback scenario is used as an example. If the first information indicates the type of the CSI input data, the type of the CSI input data may include one or more of the following: a CSI-RS (or another reference signal); channel information H; a feature vector W; or precoding information V.

In some implementations, the first information may indicate one of the foregoing different types of CSI input data. For example, the first device may indicate one of the foregoing different types of CSI input data by using N (N is greater than or equal to 1) bit information. For example, the first device may indicate one of the foregoing different types of CSI input data by using 1-bit information, where a value of the 1-bit information being 0 may indicate that the CSI input data is the channel information H, and a value of the 1-bit information being 1 may indicate that the CSI input data is the feature vector W. For another example, the first device may indicate one of the foregoing different types of CSI input data by using 2-bit information. For example, a value of the 2-bit information being 00 may indicate the channel information H, a value of the 2-bit information being 01 may indicate the feature vector W, a value of the 2-bit information being 10 may indicate the reference signal, and a value of the 2-bit information being 11 may indicate a reserved bit or the precoding information V.

In some implementations, the first device may indicate one or more of the foregoing different types of CSI input data. For example, the first device may indicate one or more of the foregoing different types of CSI input data by using an N-bit bitmap (bitmap). For example, the first device may carry the first information by using a 4-bit bitmap. Whether a bit in the four bits is set to be valid (bit 1 indicates being valid, or bit 0 indicates being valid) represents whether a corresponding one of four different types of CSI input data (for example, the CSI-RS, the channel information H, the feature vector W, and the precoding information V) is valid. For example, the first information includes the 4-bit bitmap, and a value of the bitmap is 0110. The bitmap may indicate that the first device supports the channel information H and the feature vector W as CSI input data. In other words, for the first device, an acceptable scheme is that the channel information H is used as the CSI input data or the feature vector W is used as the CSI input data.

In some implementations, the first device may indicate one or more of the foregoing different types of CSI input data. For example, the first device may indicate one or more of the foregoing different types of CSI input data by using M-bit information. For example, the first device may indicate one or more of the foregoing different types of CSI input data by using 2-bit information. In the 2-bit information, 01 indicates that the channel information H may be used as the CSI input data, 10 indicates that the feature vector W may be used as the CSI input data, and 11 indicates that the channel information H and the feature vector W may be used as the CSI input data. In other words, for the first device, an acceptable scheme is that the channel information H is used as the CSI input data or the feature vector W is used as the CSI input data.

In an example in which the first device is a terminal device and the second device is a network device, the first information may be carried in UCI. For example, if the terminal device requires part of data to update or adjust a local model, and the terminal device has a relatively high requirement for timeliness of data arrival, model update, or adjustment, the terminal device may implement the indication of the first information in a manner of indicating by the UCI.

Still using an example in which the first device is a terminal device and the second device is a network device, the first information may be carried in RRC signaling (or an RRC message). For example, if the terminal device requires more data to train a model for the terminal device (for example, a CSI compression and coding model on the terminal device side), and a timeliness requirement of the terminal device for model training is not high, the terminal device may implement indication of the first information by using an RRC message.

In some implementations, the first information may be further used to indicate a sub-type of a type of a first data set. In some embodiments, the sub-type may be referred to as a format of the first data set.

Still in an example in which the first information indicates the CSI input data, the first information may further indicate more formats of the CSI input data. The format of the CSI input data may include one or more of a CSI-RS configuration format, a format of the channel information H, or a format of the feature vector W.

For example, the first information may indicate the CSI-RS configuration format used for model training. The CSI-RS configuration format may include one or more of the following: frequency domain distribution bandwidth, density, positions, quantity, time domain positions, or a quantity of CSI-RSs.

For another example, the first information may indicate a format of the channel information H. The format of the channel information H may include one or more of the following types of the channel information H: a frequency domain distribution width, a frequency domain granularity, a time domain distribution width, a time domain granularity, a position indication of partial channels extracted in time domain, an angular distribution range, an angular domain granularity, a position indication of partial channels extracted in angular domain, a quantity of transmit and receive antenna pairs, or an arrangement manner of transmit and receive antenna pairs.

For another example, the first information may indicate a format of the feature vector W. The format of the feature vector W may include one or more of the following corresponding to the feature vector W: a quantity of sub-bands, a sub-band size, a length of a sub-band feature vector, or a quantity of transmit antennas.

In some implementations, the first device may directly transmit information related to the foregoing format to the second device, or the first device may encode information related to the foregoing format, and transmit the encoded information to the second device.

For example, the first information may directly indicate that a quantity of sub-bands corresponding to CSI input data (for example, the feature vector W) is 13, a sub-band size corresponding to the CSI input data is 4 resource blocks (resource block, RB), and a sub-band feature vector length corresponding to the CSI input data is 32.

For another example, as shown in Table 1, the first information may include K-bit indication information, and the K-bit indication information may indicate one of or a combination of the quantity of sub-bands, the sub-band size, or the sub-band feature vector length that corresponds to the CSI input data (for example, the feature vector W).

**Table 1**

| Indication information | Quantity of sub-bands | Sub-band size | Sub-band feature vector length |
|---|---|---|---|
| 00 | 13 | 4 RBs | 8 |
| 01 | 13 | 4 RBs | 32 |
| 10 | N1 | N2 | N3 |
| 11 | M1 | M2 | M3 |

In Table 1, values of N1 and M1 may be positive integers less than or equal to 273, a value of N2 or M2 may be one of 2 RBs, 4 RBs, 6 RBs, 8 RBs, or 10 RBs, and a value of N3 or M3 may be one of 2, 4, 8, 16, 32, 64, 128, or 256. It should be understood that, Table 1 is only an example, indication information in Table 1 may include fewer or more bits, and the sub-band quantity, the sub-band size, or the sub-band feature vector length in Table 1 may be another value.

In some embodiments, an indication of the type of the first data set (for example, an indication of the type of the CSI input data) and an indication of the sub-type of the type of the first data set (for example, an indication of the format of the CSI input data) may be mutually independent or may be jointly indicated.

In some implementations, after receiving the first information, the second device may transmit the first data set to the first device. In other words, the second device may transmit, to the first device, a data set that conforms to a type indicated by the first information.

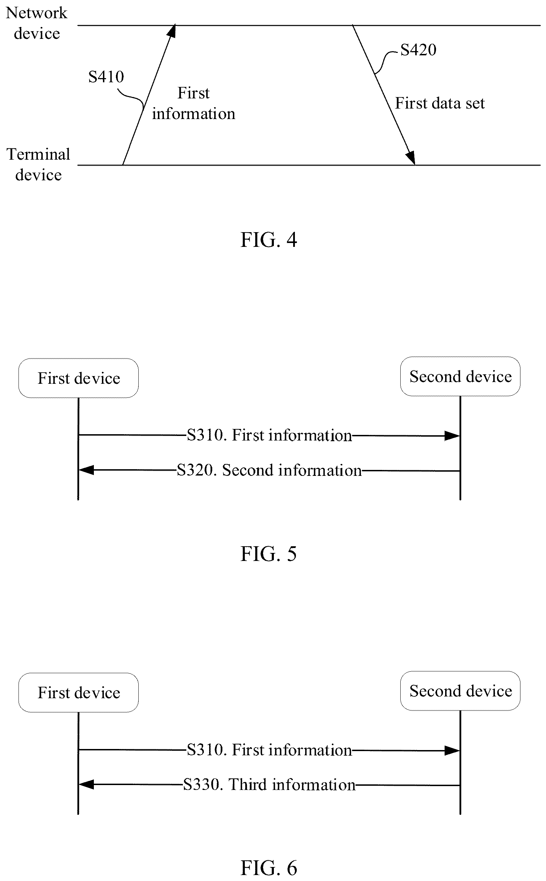

In an example of CSI feedback, it is assumed that the first device is a terminal device, and the second device is a network device. Referring to FIG. 4, in step S410, the terminal device may transmit first information to the network device. The first information may be used to indicate a type and/or a format of the CSI input data. After receiving the first information, the network device may continue to perform step S420, that is, the network device transmits a first data set to the terminal device. A type and/or a format of the first data set may correspond to an indication of the first information.

In some embodiments, referring to FIG. 5, step S320 may be further included, that is, the first device receives second information transmitted by the second device. The second information may be used to indicate a type of a data set provided by the second device.

In some implementations, the type indicated by the second information is a sub-type (or referred to as format information) of the type indicated by the first information. In this implementation, it may be understood that the type of the data set provided by the second device matches or corresponds to the type of the first data set. In an example in which the first information indicates the CSI input data, after receiving the first information, the second device may transmit, to the first device based on the type of the CSI input data indicated by the first information, more format information of the CSI input data provided for the first device. In other words, after the first device transmits a simple type of the CSI input data to the second device, the second device provides data of a corresponding type, and the second device provides more description information of a data format by using the second information.

In some implementations, the type indicated by the second information does not correspond to (or does not match) the type indicated by the first information. In an example in which the first information indicates the CSI input data, after receiving the first information, the second device does not provide the first data set for the first device based on the type of the CSI input data indicated by the first information. In this case, the second device may indicate, by using the second information, type and/or format information of the second data set provided by the second device. For example, the first device indicates the type of the CSI input data, but the second device cannot provide a data set of this type. Therefore, the second device provides a data set of another type (namely, an available data set) for the first device. In this case, the second device may notify, by using the second information, the first device of CSI input data type and/or format information of the data set provided by the second device. In embodiments of this application, when the second device cannot meet a data set type and/or format required by the first device, the second device may alternatively notify the first device of a type and/or a format of an available data set by using an explicit indication information (namely, the second information).

In some embodiments, the second device transmitting the second information to the first device may not be related to whether the second device receives the first information. For example, the second device may transmit the second information to the second device before receiving the first information, or may transmit the second information to the second device after receiving the first information.

Still using an example in which the first information indicates the CSI input data, the second information may further indicate more formats of the CSI input data. The format mentioned herein may include one or more of the following formats.

For example, the second information may indicate a CSI-RS configuration format used for model training. The CSI-RS configuration format may include one or more of the following: frequency domain distribution bandwidth, density, positions, quantity, time domain positions, or a quantity of CSI-RSs.

For another example, the second information may indicate a format of channel information H. The format of the channel information H may include one or more of the following types of the channel information H: a frequency domain distribution width, a frequency domain granularity, a time domain distribution width, a time domain granularity, a position indication of partial channels extracted in time domain, an angular distribution range, an angular domain granularity, a position indication of partial channels extracted in angular domain, a quantity of transmit and receive antenna pairs, or an arrangement manner of transmit and receive antenna pairs.

For another example, the second information may indicate a format of a feature vector W. The format of the feature vector W may include one or more of the following corresponding to the feature vector W: a quantity of sub-bands, a sub-band size, a length of a sub-band feature vector, or a quantity of transmit antennas.

In some implementations, the second device may directly transmit information related to the foregoing format to the first device, or the second device may encode information related to the foregoing format, and transmit the encoded information to the first device.

For example, the second information may directly indicate that a quantity of sub-bands corresponding to CSI input data (for example, the feature vector W) is 13, a sub-band size corresponding to the CSI input data is 4 RBs, and a sub-band feature vector length corresponding to the CSI input data is 32.

For another example, as shown in Table 2, the second information may include K-bit indication information, and the K-bit indication information may indicate one of or a combination of the quantity of sub-bands, the sub-band size, or the sub-band feature vector length that corresponds to the CSI input data (for example, the feature vector W).

**Table 2**

| Indication information | Quantity of sub-bands | Sub-band size | Sub-band feature vector length |
|---|---|---|---|
| 00 | 13 | 4 RBs | 8 |
| 01 | 13 | 4 RBs | 32 |
| 10 | N1 | N2 | N3 |
| 11 | M1 | M2 | M3 |

In Table 2, values of N1 and M1 may be positive integers less than or equal to 273, a value of N2 or M2 may be one of 2 RBs, 4 RBs, 6 RBs, 8 RBs, or 10 RBs, and a value of N3 or M3 may be one of 2, 4, 8, 16, 32, 64, 128, or 256. It should be understood that, Table 2 is only an example, indication information in Table 2 may include fewer or more bits, and the sub-band quantity, the sub-band size, or the sub-band feature vector length in Table 2 may be another value.

In some implementations, referring to FIG. 6, in step S330, the first device receives third information transmitted by the second device. The third information may be used to indicate that the second device is capable of or is not capable of providing the first data set.

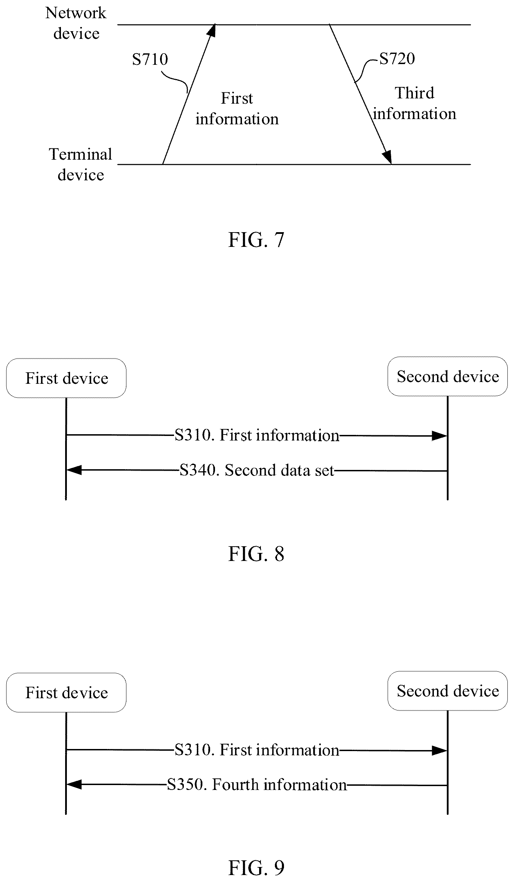

In an example of CSI feedback, it is assumed that the first device is a terminal device, and the second device is a network device. Referring to FIG. 7, in step S710, the terminal device transmits first information to the network device, and the first information is used to indicate a type and/or a format of CSI input data. In step S720, the network device transmits third information to the terminal device, where the third information is used to indicate that the network device is capable of or is not capable of providing a data set corresponding to the first information, that is, being capable of or not capable of providing CSI input data that conforms to the type and/or the format indicated by the first information.

In some implementations, referring to FIG. 8, in step S340, the second device transmits a second data set to the first device. A type of the second data set does not correspond to a type of the first data set. Embodiments illustrated in FIG. 8 may be combined with embodiments illustrated in FIG. 6. For example, the second device may first indicate, by using third information, that the second device is not capable of providing the first data set, and then transmit the second data set to the first device. Certainly, in some implementations, the second device may alternatively transmit the second data set to the first device directly without transmitting the third information, so as to implicitly indicate that the second device is not capable of providing the first data set.

In some implementations, referring to FIG. 9, in step S350, the second device may transmit fourth information to the first device, and the fourth information is used to indicate one or more of the following: the type of the second data set; or a difference between the type of the second data set and the type of the first data set.

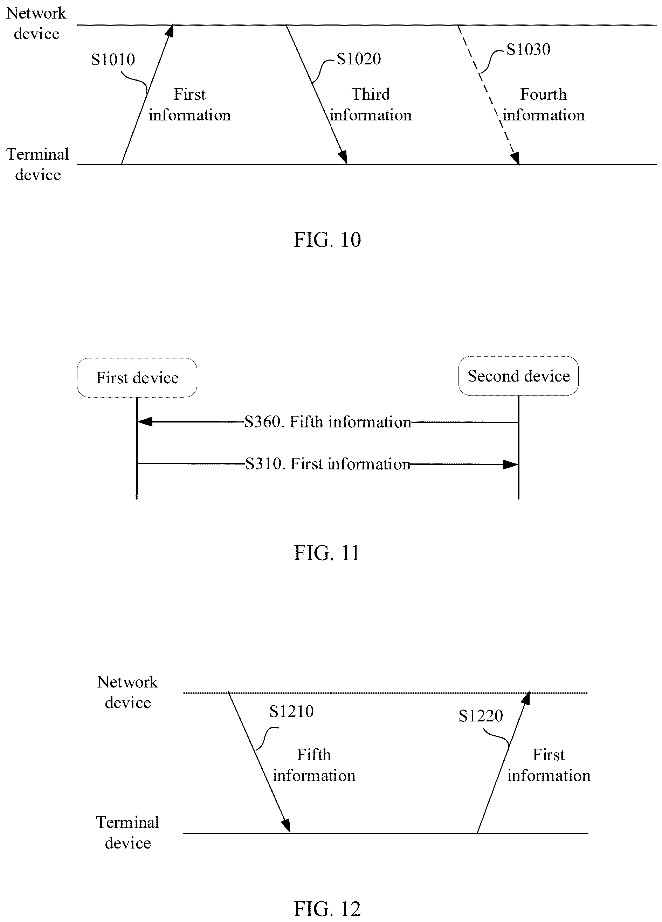

In an example of CSI feedback, it is assumed that the first device is a terminal device, and the second device is a network device. Referring to FIG. 10, in step S1010, the terminal device transmits first information to the network device, and the first information is used to indicate a type and/or a format of CSI input data. In step S1020, the network device transmits third information to the terminal device, where the third information is used to indicate that the network device is not capable of providing a data set corresponding to the first information. In step S1030, the network device transmits fourth information to the terminal device, where the fourth information is used to indicate a type of a second data set, or indicate a point where the second data set does not correspond to a first data set. A manner of indicating the type of the second data set by using the fourth information is similar to a manner of indicating the type of the first data set by using the first information. Reference may be made to the foregoing description of the first information, and details are not described herein again.

In some implementations, referring to FIG. 11, before step S310, step S360 may be further included, that is, the first device receives fifth information transmitted by the second device. The fifth information may be used to indicate candidate data sets providable by the second device (that is, a collection of data sets providable by the second device). For example, the fifth information may be used to indicate types and/or formats of the candidate data sets providable by the second device. According to embodiments of this application, the second device notifies the first device of an available candidate data set schemes in advance in an information exchange manner, so that the first device may make a secondary selection in the candidate data set schemes, thereby simplifying implementation for the first device.

Still using an example of CSI feedback, the fifth information may indicate a type of CSI input data providable by the second device. For example, the fifth information may indicate that the second device is capable of providing one or more of the following types of CSI input data: a CSI-RS (or another reference signal); channel information H; a feature vector W; or precoding information V.

For example, the fifth information may include an N-bit bitmap, so that one or more of the foregoing different types of CSI input data is indicated by using the N-bit bitmap. For example, the fifth information is a 4-bit bitmap, and one or more of the foregoing different types of CSI input data are indicated by using the 4-bit bitmap. Whether a bit in the four bits is set to be valid (bit 1 indicates being valid, or bit 0 indicates being valid) represents whether a corresponding one of the four different types of CSI input data (for example, the CSI-RS, the channel information H, the feature vector W, and the precoding information V) is valid. For example, second information being 0110 indicates that the second device may provide a candidate data set in which the channel information H and the feature vector W are used as the CSI input data.

For another example, the fifth information may include M-bit information, and one or more of the foregoing different types of CSI input data are indicated based on the M-bit information. For example, the fifth information may include 2-bit information, and one or more of the foregoing different types of CSI input data are indicated by using the 2-bit information. A value of the fifth information being 01 indicates that the second device may provide a data set in which the channel information H is used as the CSI input data, a value of the fifth information being 10 indicates that the second device may provide a candidate data set in which the feature vector W is used as the CSI input data, and a value of the fifth information being 11 indicates that the second device may provide a candidate data set in which the channel information H and the feature vector W are used as the CSI input data.

In some implementations, the fifth information may further indicate more formats of the CSI input data. The format of the CSI input data may include one or more of a CSI-RS configuration format, a format of the channel information H, or a format of the feature vector W.

For example, the fifth information may indicate a CSI-RS configuration format used for model training. The CSI-RS configuration format may include one or more of the following: frequency domain distribution bandwidth, density, positions, quantity, time domain positions, or a quantity of CSI-RSs.

For another example, the fifth information may indicate a format of the channel information H. The format of the channel information H may include one or more of the following types of the channel information H: a frequency domain distribution width, a frequency domain granularity, a time domain distribution width, a time domain granularity, a position indication of partial channels extracted in time domain, an angular distribution range, an angular domain granularity, a position indication of partial channels extracted in angular domain, a quantity of transmit and receive antenna pairs, or an arrangement manner of transmit and receive antenna pairs.

For another example, the fifth information may indicate a format of the feature vector W. The format of the feature vector W may include one or more of the following corresponding to the feature vector W: a quantity of sub-bands, a sub-band size, a length of a sub-band feature vector, or a quantity of transmit antennas.

In some implementations, the second device may directly transmit information related to the foregoing format to the first device, or the second device may encode information related to the foregoing format, and transmit an encoded result to the first device.

For example, the fifth information may directly indicate that a quantity of sub-bands corresponding to CSI input data (for example, the feature vector W) is N1, a sub-band size corresponding to the CSI input data is N2 RBs, and a sub-band feature vector length corresponding to the CSI input data is N3.

For another example, the fifth information may be used to indicate a configuration of one or more sets of CSI input data supported by the second device. For example, the fifth information may include one or more pieces of K-bit indication information, and each piece of K-bit indication information may indicate (supported by the second device) a sub-type of CSI input data (or a format of CSI input data) (supported by the second device) corresponding to a type of CSI input data (for example, the feature vector W). For example, the K-bit information may indicate one of or a combination of the quantity of sub-bands, the sub-band size, or the sub-band feature vector length that corresponds to the feature vector W.

**Table 3**

| K-bit indication information | Quantity of sub-bands | Sub-band size | Sub-band feature vector length |
|---|---|---|---|
| 00 | 13 | 4 RBs | 8 |
| 01 | 13 | 4 RBs | 32 |
| 10 | N1 | N2 | N3 |
| 11 | M1 | M2 | M3 |

In Table 3, values of N1 and M1 may be positive integers less than or equal to 273, a value of N2 or M2 may be one of 2 RBs, 4 RBs, 6 RBs, 8 RBs, or 10 RBs, and a value of N3 or M3 may be one of 2, 4, 8, 16, 32, 64, 128, or 256. It should be understood that, Table 3 is only an example, indication information in Table 3 may include fewer or more bits, and the quantity of sub-bands, the sub-band size, or the sub-band feature vector length in Table 3 may be another value.

For another example, referring to Table 4, the fifth information may include an X-bit bitmap, and each bit position in the bitmap indicates whether a supported CSI input data format (for example, one or a combination of a quantity of sub-bands, a sub-band size, or a sub-band feature vector length corresponding to a feature vector W) corresponding to a specific CSI input data type (for example, the W) is supported. For example, the second device may indicate, by using a 4-bit bitmap 0011, two different CSI input types and/or formats of four preset CSI input types and/or formats (for example, scheme 1 and scheme 2 in schemes 1, 2, 3, and 4) supported by the second device.

**Table 4**

| Bit position | Quantity of sub-bands | Sub-band size | Sub-band feature vector length |
|---|---|---|---|
| 1 | 13 | 4 RBs | 8 |
| 2 | 13 | 4 RBs | 32 |
| 3 | N1 | N2 | N3 |
| 4 | M1 | M2 | M3 |

In Table 4, values of N1 and M1 may be positive integers less than or equal to 273, a value of N2 or M2 may be one of 2 RBs, 4 RBs, 6 RBs, 8 RBs, or 10 RBs, and a value of N3 or M3 may be one of 2, 4, 8, 16, 32, 64, 128, or 256. It should be understood that Table 4 is only an example. For example, Table 4 is described by using an example in which the fifth information includes a 4-bit bitmap. Actually, the fifth information may alternatively include a bitmap of more or fewer bits. For example, the fifth information may include an 8-bit bitmap or a 16-bit bitmap.

In an embodiment in which the fifth information indicates both a type of the CSI input data and a format (or a sub-type) of the CSI input data, two indications may be independent of each other, or a joint indication may be used.

After receiving the fifth information, the first device may transmit the first information to the second device. For content and a transmitting manner of the first information, reference may be made to the foregoing description. In addition to the foregoing implementation of the first information, in another implementation, the first information may indicate a first data set selected by the first device from a candidate data set. Still in an example of CSI feedback, the fifth information may indicate a CSI input type and/or format supported by the second device. The first device selects one or more types and/or formats from the CSI input types and/or formats indicated by the second device, and notifies, by using the first information, the second device of a reference number of the type and/or format selected by the first device. This number may be an absolute reference number of the CSI input type and/or format indicated by the fifth information, or may be a relative reference number of the CSI input type and/or format indicated by the fifth information.

For example, the second device indicates, by using an 8-bit bitmap 10011100, that the second device supports four different CSI input types and/or formats (for example, scheme 8, scheme 5, scheme 4, and scheme 3). When a scheme of the absolute reference number is used, the first information may indicate that the first device selects the third scheme of all schemes as a CSI input type and/or format scheme selected by the first device (for example, the scheme 3).

For another example, the second device indicates, by using an 8-bit bitmap 10011100, that the second device supports four different CSI input types and/or formats (for example, scheme 8, scheme 5, scheme 4, and scheme 3). When a scheme of the relative reference number is used, the first information may indicates that the first device selects the third scheme among schemes supported by the second device (for example, scheme 5 among scheme 3, scheme 4, scheme 5, and scheme 8) as a CSI input type and/or format scheme selected by the first device.

In an example of CSI feedback, it is assumed that the first device is a terminal device, and the second device is a network device. Referring to FIG. 12, in step S1210, the network device may transmit fifth information to the terminal device. The fifth information may be used to indicate a type and/or a format of CSI input data providable by the second device. After receiving the fifth information, the terminal device transmits first information to the network device in step S 1220. The first information may indicate a type and/or a format of a first data set selected by the terminal device, for example, a type and/or a format of CSI input data selected by the terminal device.

It should be understood that, embodiments of this application may be applied to a scenario in which the terminal device and the network device jointly train a two-end model, for example, a CSI compression model and a CSI recovery model. More specifically, embodiments of this application may be applied to scenario 1, that is, the network device trains a set of CSI compression model and CSI recovery model by using local data, and the CSI recovery model is locally used at the network device, and a data set corresponding to the obtained CSI compression model is transmitted to a terminal device side for use by the terminal device. In scenario 1, the terminal device has a requirement of data set selection and application. Thus, the first device may be the terminal device, and the second device may be the network device. Alternatively, embodiments of this application may be applied to scenario 2, that is, the terminal device trains a set of CSI compression model and CSI recovery model by using local data, and the CSI compression model is locally used at the terminal device, and a data set corresponding to the obtained CSI recovery model is transmitted to a network device side for use by the network device. In scenario 2, the network device has a requirement of data set selection and application. Thus, the first device may be the network device, and the second device may be the terminal device.

In some implementations, the "information" mentioned in embodiments of this application may be replaced with "message". For example, the first information to the fifth information mentioned above may be replaced with a first message to a fifth message. If the first device is a terminal device and the second device is a network device, the first information in the foregoing description is uplink information transmitted by the terminal device to the network device, and the second information to the fifth information are downlink information transmitted by the network device to the terminal device. If the first device is a network device and the second device is a terminal device, the first information in the foregoing description is downlink information transmitted by the network device to the terminal device, and the second information to the fifth information are uplink information transmitted by the terminal device to the network device.

The models mentioned in embodiments of this application may refer to an ML/AI model.

According to embodiments of this application, a solution in which a first device and a second device may determine an expected data set type and/or format through information exchange is provided. In embodiments of this application, in a scenario of a two-end training model, more selectivity of data and interfaces can be provided, to reduce limitations on the data type and/or format of the two-end training model, which can also alleviate limitations on model training performance of the two-end training model.

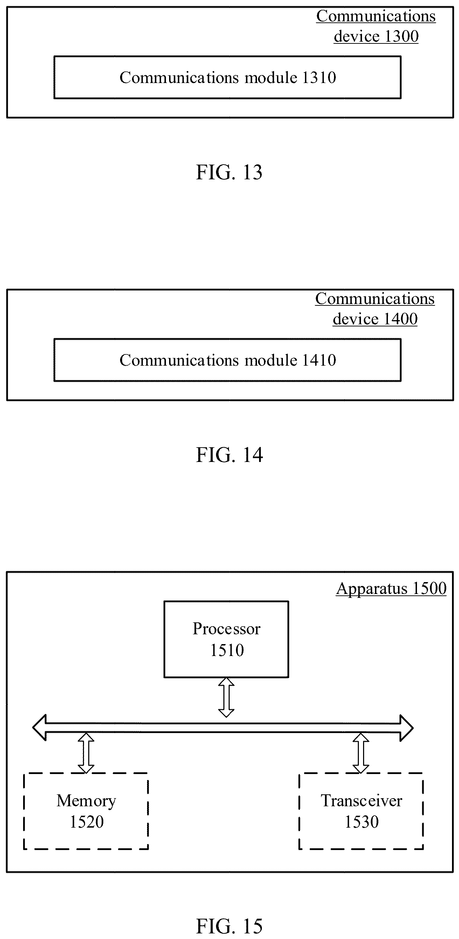

The method embodiments of this application are described above in detail with reference to FIG. 1 to FIG. 12. Apparatus embodiments of this application are described below in detail with reference to FIG. 13 to FIG. 15. It should be understood that the descriptions of the method embodiments correspond to descriptions of the apparatus embodiments, and therefore, for parts that are not described in detail, reference may be made to the foregoing method embodiments.

FIG. 13 is a schematic diagram of a structure of a communications device according to an embodiment of this application. A communications device 1300 in FIG. 13 may be the first device mentioned above. The communications device 1300 includes a communications module 1310.

The communications module 1310 may be configured to transmit first information to a second device. The first information is used to indicate a type of a first data set.

In some implementations, the type of the first data set includes one or more of the following: a type of input data; or a type of output data.

In some implementations, the communications module 1310 may be further configured to receive second information transmitted by the second device, where the second information is used to indicate a type of a data set provided by the second device.

In some implementations, the type indicated by the second information is a sub-type of the type indicated by the first information.

In some implementations, the type indicated by the second information does not correspond to the type indicated by the first information.

In some implementations, the communications module 1310 may be further configured to receive third information transmitted by the second device, where the third information is used to indicate that the second device is capable of or is not capable of providing the first data set.

In some implementations, the communications module 1310 may be further configured to: in a case that the second device is not capable of providing the first data set, receive the second data set transmitted by the second device.

In some implementations, the communications module 1310 may be further configured to: receive fourth information transmitted by the second device, where the fourth information is used to indicate one or more of the following: a type of the second data set; or a difference between the type of the second data set and the type of the first data set.

In some implementations, the communications module 1310 may be further configured to: before the first device transmits the first information to the second device, receive fifth information transmitted by the second device, where the fifth information is used to indicate candidate data sets providable by the second device.

In some implementations, the first information is used to indicate the first data set selected by the first device from the candidate data sets.

In some implementations, the communications module 1310 may be further configured to receive the first data set transmitted by the second device.

In some implementations, the first data set is used to train a model for the first device.

In some implementations, the model is a CSI compression model or a CSI decompression model.

In some implementations, the first information indicates a type of input data of a CSI compression model, and the type of the input data includes one or more of the following: a CSI-RS; channel information; a feature vector; or precoding information.

In some implementations, the first device is a terminal device, and the second device is a network device; or the first device is a network device, and the second device is a terminal device.

FIG. 14 is a schematic diagram of a structure of a communications device according to an embodiment of this application. A communications device 1400 in FIG. 14 may be the second device mentioned above. The communications device 1400 includes a communications module 1410.

The communications module 1410 may be configured to receive first information transmitted by a first device. The first information is used to indicate a type of a first data set.

In some implementations, the type of the first data set includes one or more of the following: a type of input data; or a type of output data.

In some implementations, the communications module 1410 may be further configured to transmit second information to the first device, where the second information is used to indicate a type of a data set provided by the second device.

In some implementations, the type indicated by the second information is a sub-type of the type indicated by the first information.

In some implementations, the type indicated by the second information does not correspond to the type indicated by the first information.

In some implementations, the communications module 1410 may be further configured to transmit third information to the first device, where the third information is used to indicate that the second device is capable of or is not capable of providing the first data set.

In some implementations, the communications module 1410 may be further configured to: in a case that the second device is not capable of providing the first data set, transmit a second data set to the first device.

In some implementations, the communications module 1410 may be further configured to: transmit fourth information to the first device, where the fourth information is used to indicate one or more of the following: a type of the second data set; or a difference between the type of the second data set and the type of the first data set.

In some implementations, the communications module 1410 may be further configured to: before the second device receives the first information transmitted by the first device, transmit fifth information to the first device, where the fifth information is used to indicate candidate data sets providable by the second device.

In some implementations, the first information is used to indicate the first data set selected by the first device from the candidate data sets.

In some implementations, the communications module 1410 may be further configured to transmit the first data set to the first device.

In some implementations, the first data set is used to train a model for the first device.

In some implementations, the model is a CSI compression model or a CSI decompression model.

In some implementations, the first information indicates a type of input data of a CSI compression model, and the type of the input data includes one or more of the following: a CSI-RS; channel information; a feature vector; or precoding information.

In some implementations, the first device is a terminal device, and the second device is a network device; or the first device is a network device, and the second device is a terminal device.

FIG. 15 is a schematic structural diagram of an apparatus according to an embodiment of this application. Dashed lines in FIG. 15 indicate that a unit or module is optional. The apparatus 1500 may be configured to implement the methods described in the foregoing method embodiments. The apparatus 1500 may be a chip or a terminal device.

The apparatus 1500 may include one or more processors 1510. The processor 1510 may support the apparatus 1500 in implementing the methods described in the foregoing method embodiments. The processor 1510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1500 may further include one or more memories 1520. The memory 1520 stores a program, and the program may be executed by the processor 1510, to cause the processor 1510 to execute the methods described in the foregoing method embodiments. The memory 1520 may be separated from or integrated into the processor 1510.

The apparatus 1500 may further include a transceiver 1530. The processor 1510 may communicate with another device or chip by using the transceiver 1530. For example, the processor 1510 may transmit data to and receive data from another device or chip by using the transceiver 1530.

An embodiment of this application further provides a computer-readable storage medium for storing a program. The computer-readable storage medium may be applied to the communications device provided in embodiments of this application, and the program causes a computer to perform the methods performed by the communications device in various embodiments of this application.

An embodiment of this application further provides a computer program product. The computer program product includes a program. The computer program product may be applied to the communications device provided in embodiments of this application, and the program causes a computer to perform the methods performed by the communications device in various embodiments of this application.

An embodiment of this application further provides a computer program. The computer program may be applied to the communications device provided in embodiments of this application, and the computer program causes a computer to execute the methods executed by the communications device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatuses or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
transmitting, by a first device, first information to a second device, wherein the first information is used to indicate a type of a first data set.

2. The method according to claim 1, wherein the type of the first data set comprises one or more of following:
a type of input data; or
a type of output data.

3. The method according to claim 1 or 2, wherein the method further comprises:
receiving, by the first device, second information transmitted by the second device, wherein the second information is used to indicate a type of a data set provided by the second device.

4. The method according to claim 3, wherein the type indicated by the second information is a sub-type of the type indicated by the first information.

5. The method according to claim 3, wherein the type indicated by the second information is not corresponding to the type indicated by the first information.

6. The method according to any one of claims 1 to 5, further comprising:
receiving, by the first device, third information transmitted by the second device, wherein the third information is used to indicate that the second device is capable of or is not capable of providing the first data set.

7. The method according to claim 6, wherein the method further comprises:
in a case the second device is not capable of providing the first data set, receiving, by the first device, a second data set transmitted by the second device.

8. The method according to claim 7, wherein the method further comprises:
receiving, by the first device, fourth information transmitted by the second device, wherein the fourth information is used to indicate one or more of following:
a type of the second data set; or
a difference between the type of the second data set and the type of the first data set.

9. The method according to any one of claims 1 to 8, wherein before the transmitting, by the first device, the first information to the second device, the method further comprises:
receiving, by the first device, fifth information transmitted by the second device, wherein the fifth information is used to indicate candidate data sets providable by the second device.

10. The method according to claim 9, wherein the first information is used to indicate the first data set selected by the first device from the candidate data sets.

11. The method according to any one of claims 1 to 4, wherein the method further comprises:
receiving, by the first device, the first data set transmitted by the second device.

12. The method according to any one of claims 1 to 11, wherein the first data set is used to train a model for the first device.

13. The method according to claim 12, wherein the model is a channel state information CSI compression model or a CSI decompression model.

14. The method according to any one of claims 1 to 13, wherein the first information indicates a type of input data of a CSI compression model, and the type of the input data comprises one or more of following:
a channel state information reference signal CSI-RS;
channel information;
a feature vector; or
precoding information.

15. The method according to any one of claims 1 to 14, wherein the first device is a terminal device, and the second device is a network device; or the first device is a network device, or the second device is a terminal device.

16. A communication method, comprising:
receiving, by a second device, first information transmitted by a first device, wherein the first information is used to indicate a type of a first data set.

17. The method according to claim 16, wherein the type of the first data set comprises one or more of following:
a type of input data; or
a type of output data.

18. The method according to claim 16 or 17, wherein the method further comprises:
transmitting, by the second device, second information to the first device, wherein the second information is used to indicate a type of a data set provided by the second device.

19. The method according to claim 18, wherein the type indicated by the second information is a sub-type of the type indicated by the first information.

20. The method according to claim 18, wherein the type indicated by the second information is not corresponding to the type indicated by the first information.

21. The method according to any one of claims 16 to 20, further comprising:
transmitting, by the second device, third information to the first device, wherein the third information is used to indicate that the second device is capable of or is not capable of providing the first data set.

22. The method according to claim 21, wherein the method further comprises:
in a case that the second device is not capable of providing the first data set, transmitting, by the second device, a second data set to the first device.

23. The method according to claim 22, wherein the method further comprises:
transmitting, by the second device, fourth information to the first device, wherein the fourth information is used to indicate one or more of following:
a type of the second data set; or
a difference between the type of the second data set and the type of the first data set.

24. The method according to any one of claims 16 to 23, wherein before the receiving, by the second device, the first information transmitted by the first device, the method further comprises:
transmitting, by the second device, fifth information to the first device, wherein the fifth information is used to indicate candidate data sets providable by the second device.

25. The method according to claim 24, wherein the first information is used to indicate the first data set selected by the first device from the candidate data sets.

26. The method according to any one of claims 16 to 19, wherein the method further comprises:
transmitting, by the second device, the first data set to the first device.

27. The method according to any one of claims 16 to 26, wherein the first data set is used to train a model for the first device.

28. The method according to claim 27, wherein the model is a channel state information CSI compression model or a CSI decompression model.

29. The method according to any one of claims 16 to 28, wherein the first information indicates a type of input data of a CSI compression model, and the type of the input data comprises one or more of following:
a channel state information reference signal CSI-RS;
channel information;
a feature vector; or
precoding information.

30. The method according to any one of claims 16 to 29, wherein the first device is a terminal device, and the second device is a network device; or the first device is a network device, or the second device is a terminal device.

31. A communications device, wherein the communications device is a first device, and the first device comprises:
a communications module, configured to transmit first information to a second device, wherein the first information is used to indicate a type of a first data set.

32. The communications device according to claim 31, wherein the type of the first data set comprises one or more of following:
a type of input data; or
a type of output data.

33. The communications device according to claim 31 or 32, wherein the communications module is further configured to:
receive second information transmitted by the second device, wherein the second information is used to indicate a type of a data set provided by the second device.

34. The communications device according to claim 33, wherein the type indicated by the second information is a sub-type of the type indicated by the first information.

35. The communications device according to claim 33, wherein the type indicated by the second information is not corresponding to the type indicated by the first information.

36. The communications device according to any one of claims 31 to 35, wherein the communications module is further configured to:
receive third information transmitted by the second device, wherein the third information is used to indicate that the second device is capable of or is not capable of providing the first data set.

37. The communications device according to claim 36, wherein the communications module is further configured to:
in a case that the second device is not capable of providing the first data set, receive the second data set transmitted by the second device.

38. The communications device according to claim 37, wherein the communications module is further configured to:
receive fourth information transmitted by the second device, wherein the fourth information is used to indicate one or more of following:
a type of the second data set; or
a difference between the type of the second data set and the type of the first data set.

39. The communications device according to any one of claims 31 to 38, wherein the communications module is further configured to: before the first device transmits the first information to the second device, receive fifth information transmitted by the second device, wherein the fifth information is used to indicate candidate data sets providable by the second device.

40. The communications device according to claim 39, wherein the first information is used to indicate the first data set selected by the first device from the candidate data sets.

41. The communications device according to any one of claims 31 to 34, wherein the communications module is further configured to:
receive the first data set transmitted by the second device.

42. The communications device according to any one of claims 31 to 41, wherein the first data set is used to train a model for the first device.

43. The communications device according to claim 42, wherein the model is a channel state information CSI compression model or a CSI decompression model.

44. The communications device according to any one of claims 31 to 43, wherein the first information indicates a type of input data of a CSI compression model, and the type of the input data comprises one or more of following:
a channel state information reference signal CSI-RS;
channel information;
a feature vector; or
precoding information.

45. The communications device according to any one of claims 31 to 44, wherein the first device is a terminal device, and the second device is a network device; or the first device is a network device, or the second device is a terminal device.

46. A communications device, wherein the communications device is a second device, and the second device comprises:
a communications module, configured to receive first information transmitted by the first device, wherein the first information is used to indicate a type of a first data set.

47. The communications device according to claim 46, wherein the type of the first data set comprises one or more of following:
a type of input data; or
a type of output data.

48. The communications device according to claim 46 or 47, wherein the communications module is further configured to:
transmit second information to the first device, wherein the second information is used to indicate a type of a data set provided by the second device.

49. The communications device according to claim 48, wherein the type indicated by the second information is a sub-type of the type indicated by the first information.

50. The communications device according to claim 48, wherein the type indicated by the second information is not corresponding to the type indicated by the first information.

51. The communications device according to any one of claims 46 to 50, wherein the communications module is further configured to:
transmit third information to the first device, wherein the third information is used to indicate that the second device is capable of or is not capable of providing the first data set.

52. The communications device according to claim 51, wherein the communications module is further configured to:
in a case that the second device is not capable of providing the first data set, transmit a second data set to the first device.

53. The communications device according to claim 52, wherein the communications module is further configured to:
transmit fourth information to the first device, wherein the fourth information is used to indicate one or more of following:
a type of the second data set; or
a difference between the type of the second data set and the type of the first data set.

54. The communications device according to any one of claims 46 to 53, wherein the communications module is further configured to: before the second device receives the first information transmitted by the first device, transmit fifth information to the first device, wherein the fifth information is used to indicate candidate data sets providable by the second device.

55. The communications device according to claim 54, wherein the first information is used to indicate the first data set selected by the first device from the candidate data sets.

56. The communications device according to any one of claims 46 to 49, wherein the communications module is further configured to:
transmit the first data set to the first device.

57. The communications device according to any one of claims 46 to 56, wherein the first data set is used to train a model for the first device.

58. The communications device according to claim 57, wherein the model is a channel state information CSI compression model or a CSI decompression model.

59. The communications device according to any one of claims 46 to 58, wherein the first information indicates a type of input data of a CSI compression model, and the type of the input data comprises one or more of following:
a channel state information reference signal CSI-RS;
channel information;
a feature vector; or
precoding information.

60. The communications device according to any one of claims 46 to 59, wherein the first device is a terminal device, and the second device is a network device; or the first device is a network device, or the second device is a terminal device.

61. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 15 or claims 16 to 30.

62. An apparatus, comprising a processor configured to invoke a program from a memory, to cause the apparatus to execute the method according to any one of claims 1 to 15, or claims 16 to 30.

63. A chip, comprising a processor, configured to invoke a program from a memory to cause a device installed with the chip to execute the method according to any one of claims 1 to 15, or claims 16 to 30.

64. A computer-readable storage medium, wherein the computer-readable storage medium stores a program, and the program causes a computer to execute the method according to any one of claims 1 to 15, or claims 16 to 30.

65. A computer program product, comprising a program that causes a computer to execute the method according to any one of claims 1 to 15, or claims 16 to 30.

66. A computer program, wherein the computer program causes a computer to execute the method according to any one of claims 1 to 15, or claims 16 to 30.
